# EUROPEAN PATENT SPECIFICATION

(11) **EP 3 466 247 B1**
(45) Date of publication and mention of the grant of the patent: **14.06.2023**
(21) Application number: 18198816.3
(22) Date of filing: 05.10.2018
(51) Int. Cl.: A01G 3/053, B25F 5/02, F02B 63/02, F02D 11/02, F02D 11/04

(54) **HAND-HELD WORKING MACHINE**
TRAGBARE ARBEITSMASCHINE
MACHINE DE TRAVAIL PORTATIVE

(30) Priority: 06.10.2017 JP 2017195818
(43) Date of publication of application: 10.04.2019
(73) Proprietor: Maruyama MFG. Co., Inc., Tokyo 101-0047 (JP)
(72) Inventor: ATSUTA, Hidemitsu, Tokyo 101-0047 (JP)
(74) Representative: Grünecker Patent- und Rechtsanwälte PartG mbB

(56) References cited:
- EP-A2- 1 901 602
- WO-A2-2006/134749
- DE-A1- 4 021 277
- US-A- 6 108 867

## Description

### TECHNICAL FIELD

The present invention relates to a hand-held working machine according to the preamble of independent claim 1.

### BACKGROUND

Such a hand-held working machine is known from DE 40 21 277 A1, which is considered to represent the closest prior art. In detail, this document discloses a hand-held working machine with, wherein a rear handle equipped with a throttle lever and a safety lever is pivotable relative to a support part about an horizontal axis. To this end, unlockable locking means are arranged on the lower front side of the rear handle.

US 6 108 867 A provides a handling device for a power working machine having a rotatable rear handle portion, wherein the handling device is constructed such that the rear handle portion is always locked against rotation whenever the control lever for actuating the control member of the prime mover is manipulated, and wherein, when the rotation of the rear handle is once engaged and fixed, a locking mechanism is actuated to lock the rotation of rear handle portion.

WO 2006/134749 A2 and EP 1 901 602 A2 illustrate alternative hand-held working machines.

Moreover, conventionally, as a hedge trimmer which is a hand-held working machine that uniformly trims hedges and trees, one described in JP 2005 160303 A is known. The hedge trimmer disclosed in JP 2005 160303 A includes a cutting blade (cutting edge) which is provided at a front portion of a machine body to cut off branches and the like and a rear handle (handle) which is provided at a rear portion of the machine body to be gripped by an operator. In this hedge trimmer, a front portion of the rear handle is provided with a throttle lever which is swingable (tiltable) from a non-working position to a working position and a throttle fixing lever which disables the swinging of the throttle lever if necessary. Branches and the like are cut off while the cutting blade is driven by a prime mover mounted on the machine body and an output of the prime mover is adjusted by the throttle lever.

In such a hedge trimmer, in order to improve workability, the rear handle is adapted to be rotatable according to a trimming position. That is, the rear handle is rotatably connected to a shaft portion extending from the machine body and the rear handle is provided with a locking mechanism for stopping the rotation of the rear handle. An operation portion for operating the locking mechanism is provided at a push-type switch at a rear portion of the rear handle. When the operation portion is operated (pushed), the locking mechanism moves backward so that the locking of the rear handle is released and the rear handle is rotatable. Along with the releasing of the locking state, the throttle fixing lever is locked so that the operation of the throttle lever is prohibited. Further, during the operation of the throttle lever, the throttle fixing lever engages with the locking mechanism so that the operation portion is locked and the rotation of the rear handle is prohibited.

In this way, in the hedge trimmer disclosed in JP 2005 160303 A, the operation of the throttle lever during the rotation of the rear handle is regulated and the rotation of the rear handle during the operation of the throttle lever is regulated, thereby improving safety.

### SUMMARY

Here, since the operation portion of the rear portion of the rear handle is pushed at the time of rotating the rear handle, there is a need to re-grasp the rear portion of the rear handle by a hand grasping the throttle lever of the front portion of the rear handle. In this way, when the rear handle is re-grasped each time the rear handle is rotated, the rear handle which needs to be reliably held becomes loose once. Accordingly, there is a possibility that the hedge trimmer will slide and drop. As a result, since the operation portion collides with something to be pushed, there is concern that the rear handle may rotate unintentionally.

Further, in recent years, some hedge trimmers can rotate the rear handle without re-grasping most of the rear handle. However, also in such hedge trimmers, there is concern that the rear handle may be unintentionally rotated when the operation portion collides with something or the operation portion is unintentionally simply pushed.

The invention has been made to solve such problems and an object of the invention is to provide a hand-held working machine including a hedge trimmer which can remarkably reduce an unintentional rotation of a rear handle.

According to the present invention defined in independent claim 1, this object is solved by a hand-held working machine, comprising: a machine body; a drive source mounted on the machine body; a cutting blade provided at a front portion of the machine body to protrude and driven by the drive source to cut off a cutting target; and a rear handle rotatably connected to a rear portion of the machine body and grasped by an operator, the rear handle including a throttle lever rotated by the operation of the operator and adjusting an output of the drive source, and a lock lever stopping and locking the rotation of the rear handle, in which the rear handle includes a rotation lever being rotatably journaled to a shaft and acting on the lock lever and the throttle lever, and a torsion coil spring providing an urging force to the rotation lever to be located at a lock position, wherein in accordance with the rotation of the rotation lever at a non-lock position, the rotation of the throttle lever is regulated and the locking of the rear handle by the lock lever is released.

Here, when the operation portion for rotating the rear handle is of a push type as in the related art, there is concern that the locking of the rear handle is released also when an unintentional pushing force is generated. However, according to the invention, when the rotation lever rotates, the rotation acts on the lock lever so that the locking of the rear handle using the lock lever is released. Here, since the rotation lever generally needs to be continuously rotated in the lock release direction to a certain extent at the time of rotating the rotation lever to release the locking of the rear handle, it is difficult to continuously rotate the rotation lever in the same direction due to a collision with something or an unintentional simple pushing force. Thus, the invention can remarkably reduce the unintentional rotation of the rear handle as compared with the related art. Then, since the rotation of the rotation lever acts on the throttle lever adjusting the output of the drive source, it is possible to rotate the rear handle while regulating the rotation of the throttle lever. As a result, it is possible to improve reliability and safety.

Further, the rotation lever may include a first contact portion prohibiting the rotation of the throttle lever toward a speed increasing side when the lock lever is rotated from a lock position of locking the lock lever toward a non-lock position and a second contact portion prohibiting the rotation of the rotation lever toward the non-lock position when the throttle lever is rotated from a low speed position toward a speed increasing side and the throttle lever may include a first contact portion provided on the side of the throttle lever to come into contact with the first contact portion of the rotation lever and a second contact portion provided on the side of the throttle lever to come into contact with the second contact portion of the rotation lever.

According to the hand-held working machine, when the rotation lever is rotated from the lock position toward the non-lock position to rotate the rear handle, the first contact portion of the rotation lever comes into contact with the first contact portion of the throttle lever, so that the rotation of the throttle lever toward the speed increasing side can be prohibited and the rotation of the throttle lever can be regulated by the first contact portion. As a result, it is possible to rotate the rear handle while regulating the rotation of the throttle lever. Further, when the throttle lever is located at a position moved from the low speed position to the speed increasing side, the second contact portion of the throttle lever comes into contact with the second contact portion of the rotation lever, so that the rotation of the rotation lever toward the non-lock position can be prohibited. As a result, it is possible to regulate the rotation of the rear handle at the time of operating the throttle lever.

Since each contact portion is formed in a circular-arc shape, these contact portions can be smoothly operated due to a continuously smooth contact.

The lock lever may be rotatably connected to the rear handle and the lock lever and the rotation lever may be connected to each other by a rod. Then, one end side of the rod may be rotatably connected to one end side of the lock lever, the other end side of the rod may be loosely disposed in an elongated hole formed in the rotation lever, and when the rotation lever rotates toward the non-lock position, the first contact portions may come into contact with each other before the other end side of the rod collides with an end of the elongated hole.

According to the hand-held working machine, since the lock lever starts to rotate after the rotation of the throttle lever is regulated by the first contact portion, safety can be further improved.

The throttle lever may be disposed at the lower side of a grip portion of the rear handle, a safety lever for operating the throttle lever may be disposed at the upper side of the grip portion, and the rotation lever may be disposed at the front side of the safety lever of the upper portion of the rear handle.

According to the hand-held working machine, since the throttle lever, the safety lever, and the rotation lever are substantially intensively disposed at the front portion of the rear handle while not being distributed to the front and rear portions thereof, the arrangement becomes compact and hence operability can be improved. Particularly, in the related art, since the operation portion for releasing the locking is provided at the rear portion of the rear handle, operability is remarkably excellent.

In a configuration in which the stop switch for stopping the drive source is provided beside the rotation lever, the arrangement becomes further compact and hence the operability is further improved.

In this way, the invention can provide the hand-held working machine capable of improving reliability and safety by reducing an unintentional rotation of the rear handle.

### BRIEF DESCRIPTION OF THE DRAWINGS

FIG. 1 is a side view illustrating a hand-held working machine according to an embodiment of the invention.
FIG 2 is a plan view of FIG 1.
FIG. 3 is an enlarged side view illustrating an interior of a rear handle in FIG 1.
FIG 4 is a diagram obtained as viewed from IV-IV of FIG 3.
FIG. 5 is a rear view illustrating a position in which the rear handle is rotated and fixed.
FIG. 6 is a side view illustrating a rotation lever in FIG. 3.
FIG. 7 is a side view illustrating a throttle lever in FIG 3.
FIG 8 is an operation explanatory diagram illustrating an interior state inside the rear handle when the throttle lever is rotated to a full throttle state.
FIG. 9 is an operation explanatory diagram illustrating an interior state inside the rear handle when the rotation lever starts to be rotated from a lock position.
FIG. 10 is an operation explanatory diagram illustrating a state in which the locking of a lock lever is released after the rotation of the rotation lever so that the rear handle is rotatable.

### DETAILED DESCRIPTION

Hereinafter, preferred embodiments of a hand-held working machine according to the invention will be described with reference to the accompanying drawings. Furthermore, in the following description, the terms expressing directions such as up and down, front and rear, and right and left indicate directions with reference to an operator using a hand-held working machine. The front side (cutting blade side) of the operator is defined as "front".

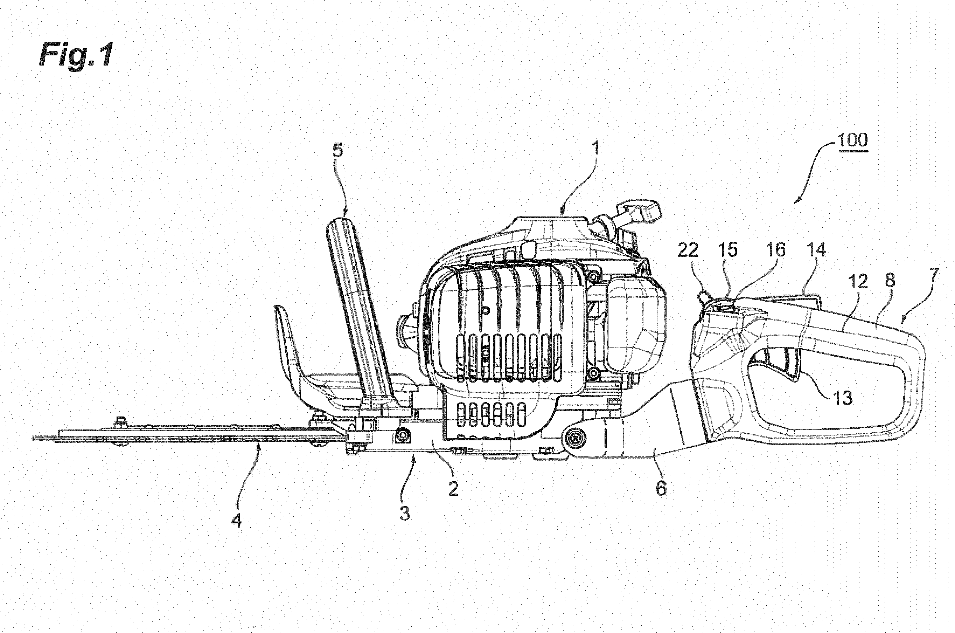

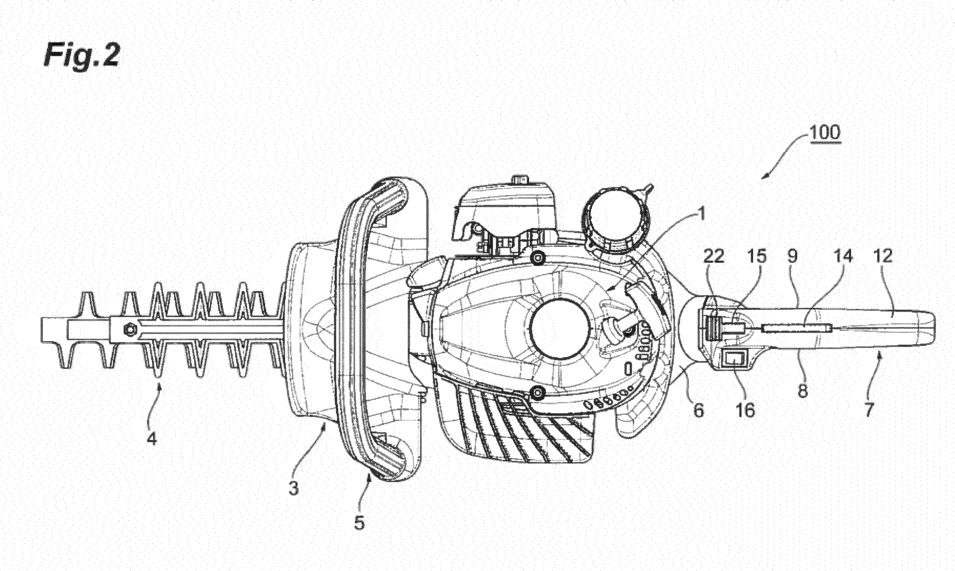

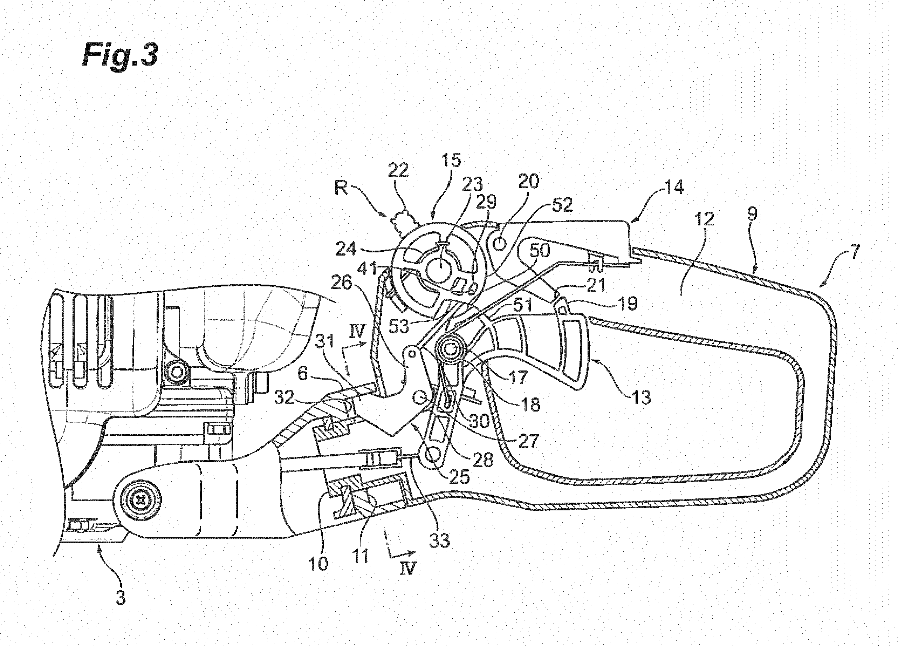

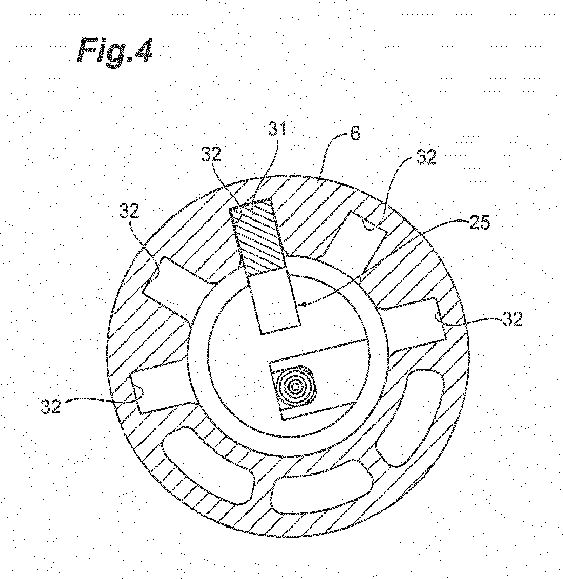

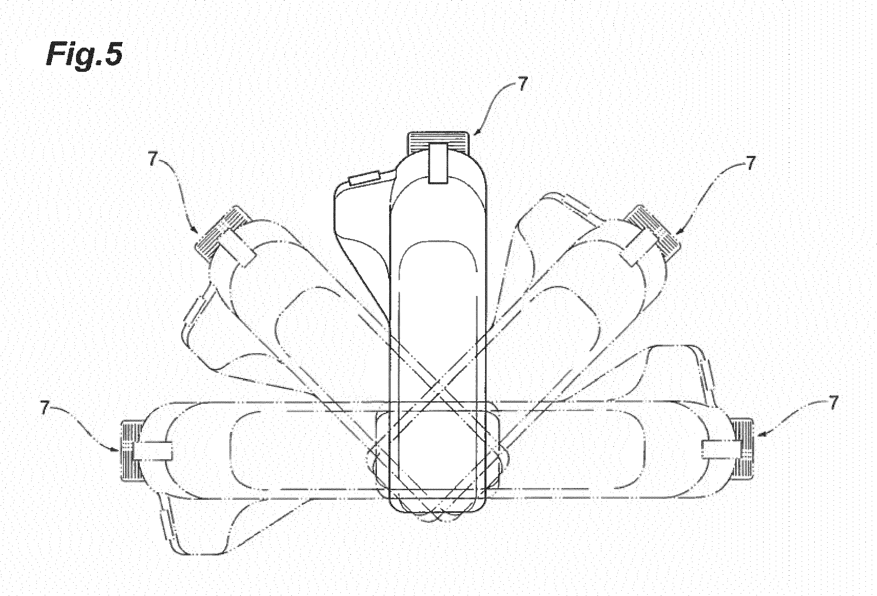

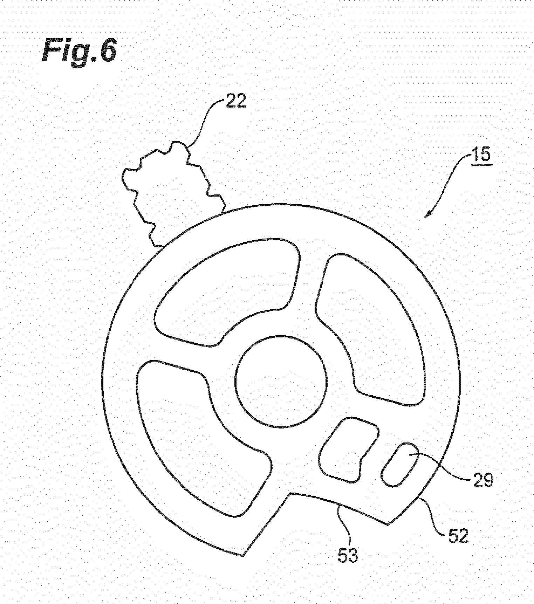

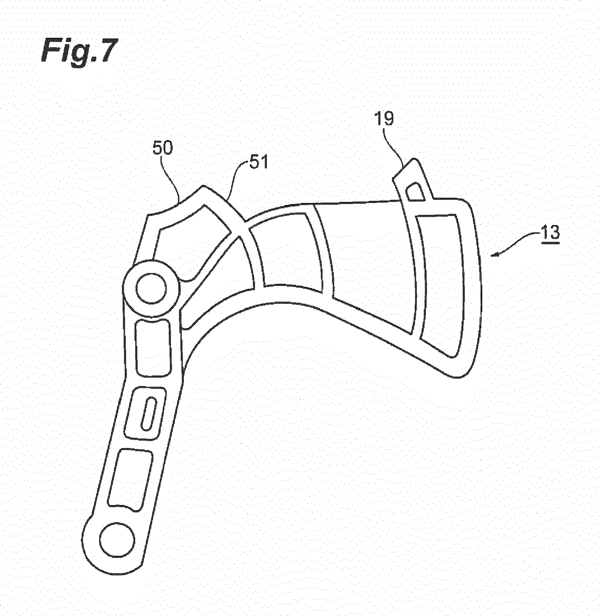

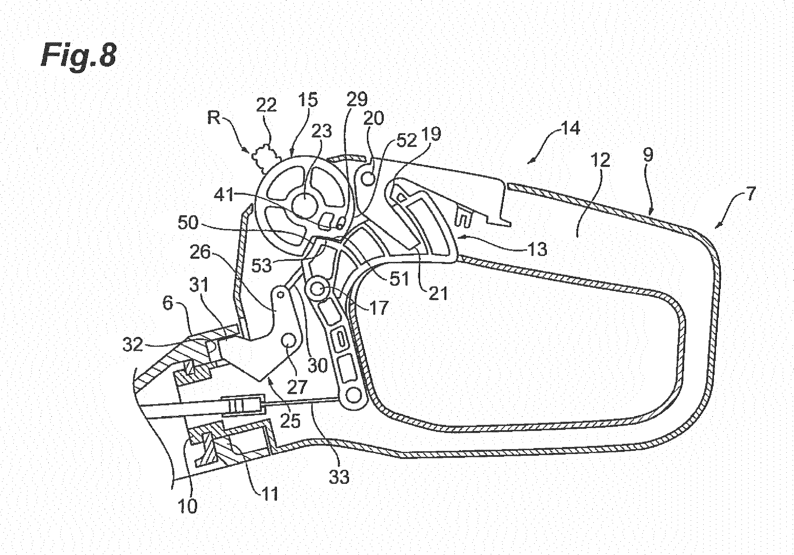

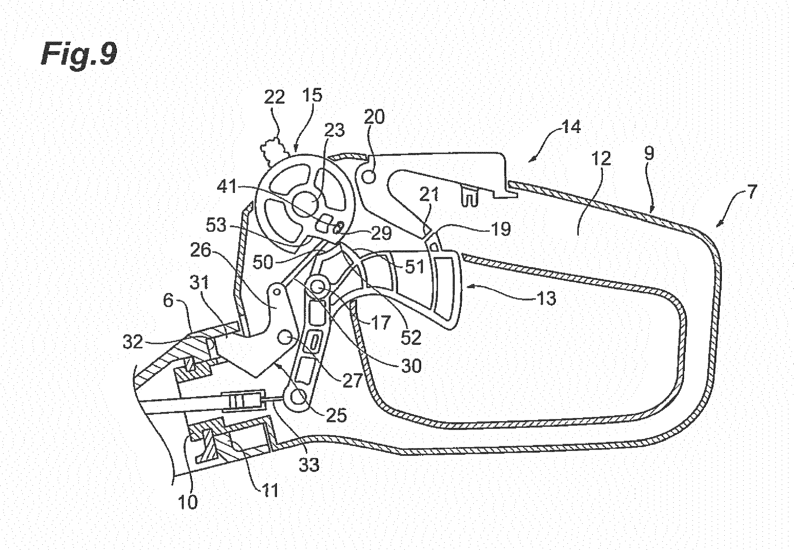

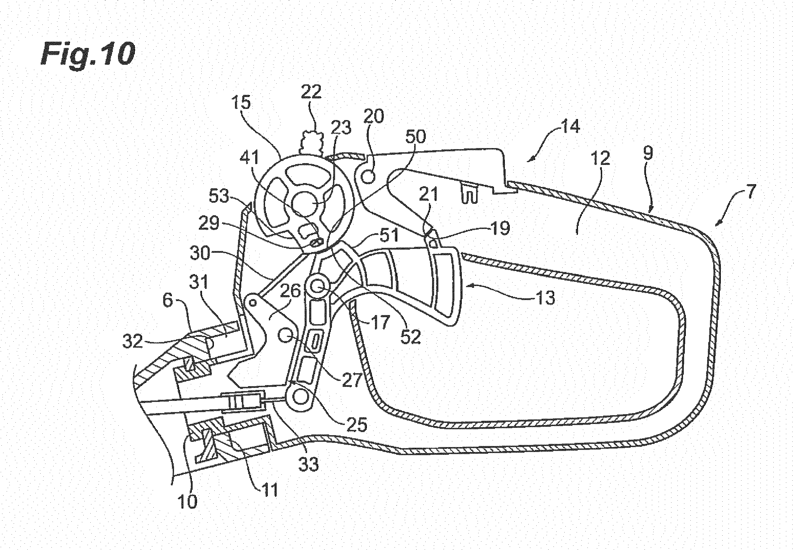

FIG. 1 is a side view illustrating a hand-held working machine according to an embodiment of the invention and FIG. 2 is a plan view of FIG 1. FIG. 3 is an enlarged side view illustrating an interior of a rear handle and FIG. 4 is a diagram obtained as viewed from IV-IV of FIG. 3. FIG. 5 is a rear view illustrating a position in which the rear handle is rotated and fixed. FIG. 6 is a side view illustrating a rotation lever and FIG. 7 is a side view illustrating a throttle lever. FIG 8 is an operation explanatory diagram illustrating an interior state inside the rear handle when the throttle lever is rotated to a full throttle state. FIG. 9 is an operation explanatory diagram illustrating an interior state inside the rear handle when the rotation lever starts to be rotated from a lock position. FIG. 10 is an operation explanatory diagram illustrating a state in which the locking of a lock lever is released after the rotation of the rotation lever so that the rear handle is rotatable.

As illustrated in FIGS. 1 and 2, the hand-held working machine is, for example, a hedge trimmer. A hedge trimmer 100 includes a machine body 3 equipped with an engine (a drive source) 1 and including a gear casing 2 and a front portion of the machine body 3 is provided with a plurality of cutting blades (blades) 4 protruding in the right and left direction (the up and down direction of FIG. 2) and arranged in parallel in the front and rear direction. Since the rotary motion of the engine 1 is converted into a reciprocating motion by a gear inside the gear casing 2, the cutting blade 4 moves in a reciprocating manner to uniformly trim a cutting target such as hedges and trees. A front handle (a sub-handle) 5 which is formed in an inverted U-shape so as to straddle the upper side and is grasped by one hand of the operator is connected to a front portion of the machine body 3 behind the cutting blade 4. Further, a rear handle attachment frame 6 is connected to the rear portion of the machine body 3. A rear handle (a main handle) 7 which is grasped by the other hand of the operator to perform various operations is rotatably connected to a rear end of the rear handle attachment frame 6.

The rear handle 7 is assembled by combining the right and left rear handle half casings 8 and 9 and is substantially formed in a rectangular ring shape in a side view. As illustrated in FIG 3, the rear handle 7 is connected to the rear portion of the attachment frame 6. A cylindrical front end portion 10 of the rear handle 7 enters the rear portion of the rear handle attachment frame 6 extending from the machine body 3 and is rotatably and axially immovably connected to an annular support portion 11 which protrudes in an annular shape inward inside the rear portion of the rear handle attachment frame 6.

In the rear handle 7, a throttle lever 13 is disposed at the lower side of an upper grip portion 12 and a safety lever 14 is disposed at the upper side of the grip portion 12. Further, in the rear handle 7, a rotation lever 15 is disposed at the front side of the upper safety lever 14 and a stop switch 16 for stopping the engine is disposed at the left side of the rotation lever 15 (see FIGS. 1 and 2).

The throttle lever 13 is used to adjust the output of the engine 1 and is formed in a boomerang shape in a side view (see FIG 7). The throttle lever 13 includes a bent portion. The bent portion of the throttle lever 13 is rotatably journaled to a shaft 17. A torsion coil spring 18 is disposed to surround the shaft 17. An urging force of the torsion coil spring 18 allows a first end (a rear end) of the throttle lever 13 to protrude downward from the grip portion 12 in the initial state. The first end of the throttle lever 13 can be pushed by fingers other than a right thumb of the operator. A convex portion having a boomerang shape in a side view is provided at the upper portion of the shaft 17 in the throttle lever 13. A first end (the left side of the drawing) of the convex portion forms a first contact portion 50 which is recessed slightly inward in a circular-arc shape and a second end (the right side of the drawing) of the convex portion forms a second contact portion 51 which is slightly swollen outward in a circular-arc shape. One end of a throttle wire 33 connected to a carburetor of the engine 1 and entering the rear handle 7 through the front end portion 10 of the rear handle 7 is rotatably connected to the lower end of the throttle lever 13. The upper portion of the rear portion of the throttle lever 13 is provided with a convex portion 19 which is formed in a protruding manner to regulate the operation of the throttle lever 13 while facing the lower end of the safety lever 14.

The safety lever 14 is used to allow the operation of the throttle lever 13 and is formed in a substantially U-shape in a side view. The safety lever 14 includes a bent portion. The bent portion of the safety lever 14 is rotatably journaled to the shaft 20. One end of the torsion coil spring 18 is locked to the lower side of the upper portion which is the first end of the safety lever 14. An urging force of the torsion coil spring 18 allows the upper portion or the rear portion of the safety lever 14 to protrude upward from the grip portion 12 in the initial state. The safety lever 14 can be pushed by a palm of the operator. A lower end 21 of a lower portion corresponding to the second end of the safety lever 14 faces the convex portion 19 of the throttle lever 13 and regulates the operation of the throttle lever 13.

The rotation lever 15 allows the rotation of the rear handle 7 while regulating the operation of the throttle lever 13 and regulates the rotation of the rear handle 7 at the time of operating the throttle lever 13. The rotation lever 15 is formed in a substantially disc shape in a side view having a plurality of empty holes penetrating in the width direction and the center portion of the rotation lever 15 is rotatably journaled to the shaft 23. The torsion coil spring 24 is disposed in the rotation lever 15 to surround the shaft 23. The upper portion of the rotation lever 15 is provided with an operation portion 22 which protrudes toward the outside of the rear handle 7. The lower portion of the rotation lever 15 is provided with a concave portion which is notched in a substantially inverted U-shape in a side view as illustrated in FIG. 6. The rear side forming the inverted V-shape (the right side of the drawing) forms a second contact portion 53 which is recessed slightly inward in a circular-arc shape. A circular-arc outer peripheral surface swollen toward the outside of the rotation lever 15 continuous to the rear end of the second contact portion 53 forms a first contact portion 52. The first contact portion 52 of the rotation lever 15 corresponds to the first contact portion 50 on the side of the throttle lever and the second contact portion 53 of the rotation lever 15 corresponds to the second contact portion 51 on the side of the throttle lever. An elongated hole 29 which follows the outer peripheral surface is opened to the inside in relation to the first and second contact portions 52 and 53 of the rotation lever 15.

As illustrated in FIG 3, the urging force of the torsion coil spring 24 allows the operation portion 22 of the rotation lever 15 to be located at a lock position R in the initial state. In this state, an intersection point of the first and second contact portions 52 and 53 of the rotation lever 15 is close to an intersection point of the first and second contact portions 50 and 51 of the throttle lever 13.

A lock lever 25 is disposed at the lower side of the rotation lever 15 and the front side of the throttle lever 13. The lock lever 25 stops and locks the rotation of the rear handle 7. The lock lever 25 includes an extension portion 26 which has a substantially V-shape in a side view and extends linearly upward from the rear end of the V-shaped portion. A portion between the V-shaped portion of the lock lever 25 and the extension portion 26 is rotatably journaled to the shaft 27. A rod 30 is disposed between the extension portion 26 of the lock lever 25 and the elongated hole 29 of the rotation lever. A first end of the rod 30 is rotatably journaled to the extension portion 26 and a second end 41 of the rod 30 is located inside the elongated hole 29. In the initial state, the second end 41 of the rod 30 is located at the left end (front end) of the elongated hole 29.

Further, the torsion coil spring 28 is disposed to surround the shaft 27. The torsion coil spring 28 urges the lock lever 25 in the clockwise rotation direction of the drawing. A front end portion 31 of the lock lever 25 is provided at the rear handle attachment frame 6 and enters any desired one of the locking grooves 32 equally arranged at five positions of the upper half portion to be locked therein as illustrated in FIG. 4. The lock lever 25 provides a lock state. That is, the rear handle 7 is not rotatable in the initial state.

A case in which an operation is performed by using the hedge trimmer 100 with such a configuration will be described. First, the operator grasps the safety lever 14 and rotates the safety lever 14 about the shaft 20 so that the lower end 21 of the safety lever 14 is separated from a position facing the convex portion 19 in the throttle lever 13. An operation is performed while the throttle lever 13 is grasped and moved to increase a speed from a low speed. Furthermore, in FIGS. 8 to 10, the torsion coil springs 18, 24, 28, and the like are omitted in order to avoid the avoid complication of drawings.

Here, when the throttle lever 13 is located at a position in which a speed is increased from a low speed position (when a state illustrated in FIG 3 changes to a state illustrated in FIG. 8 and a full throttle state illustrated in FIG 8), the second contact portion 51 which is swollen in a circular-arc shape toward the outside of the throttle lever 13 comes into contact with the second contact portion 53 which is recessed in a circular-arc shape toward the inside of the rotation lever 15. Thus, the throttle lever 13 prohibits the rotation of the rotation lever 15 toward the non-lock position (in the clockwise rotation direction) and regulates the rotation of the rear handle 7.

Here, when the operator rotates the rear handle 7, the operator releases a hand from the safety lever 14 and rotates the operation portion 22 of the rotation lever 15 from the lock position R illustrated in FIG. 8 toward the non-lock position (in the clockwise rotation direction).

Then, as illustrated in FIG. 9, the first contact portion 52 which is swollen in a circular-arc shape toward the outside of the rotation lever 15 comes into contact with the first contact portion 50 which is recessed in a circular-arc shape toward the inside of the throttle lever 13. Thus, the rotation lever 15 prohibits the rotation of the throttle lever 13 toward a speed increasing side and regulates the rotation of the throttle lever 13. When the operator further rotates the rotation lever 15 in the same direction, the contact portion of the first contact portions 50 and 52 further increases as illustrated in FIG. 10.

At the same time, the second end 41 of the rod 30 is moved from the left end (front end) of the elongated hole 29 to the right end (rear end). When the second end 41 of the rod 30 reaches the right end of the elongated hole 29, the rod 30 is pushed toward the front side so that the lock lever 25 rotates in the counter-clockwise rotation direction about the shaft 27.

Then, the front end portion 31 of the lock lever 25 illustrated in FIG. 4 exits from the locking groove 32 as illustrated in FIG. 10. The operator rotates the rear handle 7 and releases a hand from the operation portion 22. Then, the urging force of the torsion coil spring 28 locks the front end portion 31 of the lock lever 25 to a different locking groove 32 so that the rear handle 7 is set to a desired position of five positions illustrated in FIG. 5.

In this way, according to the embodiment, when the rotation lever 15 is rotated, the rotation acts on the lock lever 25 so that the locking of the rear handle 7 using the lock lever 25 is released. Here, since the rotation lever 15 generally needs to be continuously rotated in the lock release direction to a certain extent at the time of rotating the rotation lever 15 to release the locking of the rear handle 7, it is difficult to continuously rotate the rotation lever in the same direction due to a collision with something or an unintentional simple pushing force. Thus, in the embodiment, it is possible to remarkably reduce the unintentional rotation of the rear handle 7 as compared with the related art. Then, since the rotation of the rotation lever 15 acts on the throttle lever 13 adjusting the output of the engine 1, it is possible to rotate the rear handle 7 while regulating the rotation of the throttle lever 13. Accordingly, it is possible to improve reliability and safety.

Further, when the rotation lever 15 is rotated from the lock position R toward the non-lock position to rotate the rear handle 7, the first contact portion 52 of the rotation lever 15 comes into contact with the first contact portion 50 of the throttle lever 13, so that the rotation of the throttle lever 13 toward the speed increasing side can be prohibited and the rotation of the throttle lever 13 can be regulated by the first contact portions 50 and 52. As a result, it is possible to rotate the rear handle 7 while regulating the rotation of the throttle lever 13. Further, when the throttle lever 13 is located at a position moved from the low speed position to the speed increasing side, the second contact portion 51 of the throttle lever 13 comes into contact with the second contact portion 53 of the rotation lever 15, so that the rotation of the rotation lever 15 toward the non-lock position can be prohibited. As a result, it is possible to regulate the rotation of the rear handle 7 at the time of operating the throttle lever 13.

Further, since each of the first contact portions 50 and 52 and the second contact portions 51 and 53 is formed in a circular-arc shape, these contact portions can be smoothly operated due to a continuously smooth contact.

Further, when the rotation lever 15 rotates toward the non-lock position, the first contact portions 50 and 52 come into contact with each other before the other end 41 of the rod 30 collides with the right end of the elongated hole 29. For this reason, since the lock lever 25 starts to rotate after the rotation of the throttle lever 13 is regulated by the first contact portions 50 and 52, safety can be further improved.

Further, since the throttle lever 13 is disposed at the lower side of the grip portion 12 of the rear handle 7, the safety lever 14 for operating the throttle lever 13 is disposed at the upper side of the grip portion 12, and the rotation lever 15 is disposed at the front side of the safety lever 14 of the upper portion of the rear handle 7, these components are substantially intensively disposed at the front portion while not being distributed to the front and rear portions of the rear handle 7. For this reason, since the arrangement becomes compact, the operability can be improved. Particularly, in the related art, the operation portion for releasing the locking is provided at the rear portion of the rear handle. As compared with the related art, the operability is greatly excellent in the embodiment.

Further, since the stop switch 16 for stopping the engine 1 is disposed beside the rotation lever 15, the arrangement becomes more compact and hence operability can be further improved.

While the invention has been described in detail based on the embodiments, the invention is not limited to the above-described embodiments and the invention is achieved according to the appended claims. For example, in the above-described embodiments, the drive source is the engine, but the drive source may be an electric motor or the like. Further, the invention can be also applied to a working machine including a chargeable drive source. Further, in the above-described embodiments, the hand-held working machine is desirably set as the hedge trimmer, but the invention may be applied to the other hand-held working machines.

## Claims

1. A hand-held working machine (100), comprising:
a machine body (3);
a drive source (1) mounted on the machine body (3);
a cutting blade (4) provided at a front portion of the machine body (3) to protrude and driven by the drive source (1) to cut off a cutting target; and
a rear handle (7) rotatably connected to a rear portion of the machine body (3) and grasped by an operator, the rear handle (7) including
a throttle lever (13) rotated by the operation of the operator and adjusting an output of the drive source (1), and
a lock lever (25) stopping and locking the rotation of the rear handle (7),
**characterized in that**
the rear handle (7) includes
a rotation lever (15) being rotatably journaled to a shaft (23) and acting on the lock lever (25) and the throttle lever (13), and
a torsion coil spring (24) providing an urging force to the rotation lever (15) to be located at a lock position (R),
and **in that** in accordance with the rotation of the rotation lever (15) at a non-lock position, the rotation of the throttle lever (13) is regulated and the locking of the rear handle (7) by the lock lever (25) is released.

2. The hand-held working machine (100) according to claim 1,
wherein the rotation lever (15) includes a first contact portion (52) prohibiting the rotation of the throttle lever (13) toward a speed increasing side when the lock lever (25) is rotated from the lock position (R) of locking the lock lever (25) toward the non-lock position and a second contact portion (53) prohibiting the rotation of the rotation lever (15) toward the non-lock position when the throttle lever (13) is rotated from a low speed position toward a speed increasing side, and
wherein the throttle lever (13) includes a first contact portion (50) provided on the side of the throttle lever to come into contact with the first contact portion (52) of the rotation lever (15) and a second contact portion (51) provided on the side of the throttle lever to come into contact with the second contact portion (53) of the rotation lever (15).

3. The hand-held working machine (100) according to claim 2,
wherein each contact portion (50, 51, 52, 53) is formed in a circular-arc shape.

4. The hand-held working machine (100) according to claim 2 or 3,
wherein the lock lever (25) is rotatably connected to the rear handle (7),
wherein the lock lever (25) and the rotation lever (15) are connected to each other by a rod (30), and
wherein one end side of the rod (30) is rotatably connected to one end side of the lock lever (25), the other end side of the rod (30) is loosely disposed in an elongated hole (29) formed in the rotation lever (15), and when the rotation lever (15) rotates toward the non-lock position, the first contact portions (50, 52) come into contact with each other before the other end side of the rod (30) collides with an end of the elongated hole (29).

5. The hand-held working machine (100) according to any one of claims 1 to 4,
wherein the throttle lever (13) is disposed at the lower side of a grip portion (12) of the rear handle (7), a safety lever (14) for operating the throttle lever (13) is disposed at the upper side of the grip portion (12), and the rotation lever (15) is disposed at the front side of the safety lever (14) of the upper portion of the rear handle (7).

6. The hand-held working machine (100) according to claim 5,
wherein a stop switch (16) for stopping the drive source (1) is provided beside the rotation lever (15).

## Patentansprüche

1. Handgeführte Arbeitsmaschine (100), umfassend:
einen Maschinenkörper (3);
eine auf dem Maschinenkörper (3) montierte Antriebsquelle (1);
eine auf dem vorderen Abschnitt des Maschinenkörpers (3) angeordnete Schneidklinge (4) zum Hervorstehen und Angetriebenwerden durch die Antriebsquelle (1) zum Abschneiden eines Schneidziels; und
einen drehbar mit einem hinteren Abschnitt des Maschinenkörpers (3) verbundenen und von einem Bediener gehaltenen hinteren Griff (7), wobei der hintere Griff (7) einen durch die Bedienung des Bedieners gedrehten und eine Leistung der Antriebsquelle (1) anpassenden Gashebel (13) und
einen die Drehung des hinteren Griffs (7) stoppenden und verriegelnden Sperrhebel (25) umfasst,
**dadurch gekennzeichnet, dass**
der hintere Griff (7)
einen drehbar an einer Welle (23) gelagerten und auf den Sperrhebel (25) und den Gashebel (13) wirkenden Drehhebel (15) und
eine eine Zwangskraft auf den Drehhebel (15) zur Anordnung in einer Sperrstellung (R) bereitstellende Drehschraubenfeder (24) umfasst, und dass in Übereinstimmung mit der Drehung des Drehhebels (15) in einer Nicht-Sperrstellung die Drehung des Gashebels (13) geregelt und das Sperren des hinteren Griffs (7) durch den Sperrhebel (25) gelöst wird.

2. Handgeführte Arbeitsmaschine (100) nach Anspruch 1,
wobei der Drehhebel (15) einen die Drehung des Gashebels (13) zu einer Geschwindigkeitszunahmeseite verhindernden, wenn der Sperrhebel (25) von der Sperrstellung (R) zum Sperren des Sperrhebels (25) in die Nicht-Sperrstellung gedreht wird, ersten Kontaktabschnitt (52), und einen die Drehung des Drehhebels (15) in die Nicht-Sperrstellung, wenn der Gashebel (13) von einer Niedriggeschwindigkeitsstellung zu einer Geschwindigkeitszunahmeseite gedreht wird, verhindernden zweiten Kontaktabschnitt (53) umfasst, und
wobei der Gashebel (13) einen an der Seite des Gashebels angeordneten ersten Kontaktabschnitt (50) zum Herstellen eines Kontakts mit dem ersten Kontaktabschnitt (52) des Drehhebels (15) und einen an der Seite des Gashebels angeordneten zweiten Kontaktabschnitt (51) zum Herstellen eines Kontakts mit dem zweiten Kontaktabschnitt (53) des Drehhebels (15) umfasst.

3. Handgeführte Arbeitsmaschine (100) nach Anspruch 2,
wobei jeder Kontaktabschnitt (50, 51, 52, 53) in einer Kreisbogenform gebildet ist.

4. Handgeführte Arbeitsmaschine (100) nach Anspruch 2 oder 3,
wobei der Sperrhebel (25) drehbar mit dem hinteren Griff (7) verbunden ist,
wobei der Sperrhebel (25) und der Drehhebel (15) miteinander durch eine Stange (30) verbunden sind und
wobei ein Ende der Stange (30) drehbar mit einer Endseite des Sperrhebels (25) verbunden ist, die andere Endseite der Stange (30) lose in einem im Drehhebel (15) gebildeten Langloch (29) angeordnet ist und, wenn sich der Drehhebel (15) in die Nicht-Sperrstellung dreht, die ersten Kontaktabschnitte (50, 52) miteinander in Kontakt kommen, bevor die andere Endseite der Stange (30) mit einem Ende des Langlochs (29) kollidiert.

5. Handgeführte Arbeitsmaschine (100) nach einem der Ansprüche 1 bis 4,
wobei der Gashebel (13) an der unteren Seite eines Griffabschnitts (12) des hinteren Griffs (7) angeordnet ist, ein Sicherheitshebel (14) zum Betätigen des Gashebels (13) an der oberen Seite des Griffabschnitts (12) angeordnet ist und der Drehhebel (15) an der vorderen Seite des Sicherheitshebels (14) des oberen Abschnitts des hinteren Griffs (7) angeordnet ist.

6. Handgeführte Arbeitsmaschine (100) nach Anspruch 5,
wobei ein Stoppschalter (16) zum Stoppen der Antriebsquelle (1) neben dem Drehhebel (15) angeordnet ist.

## Revendications

1. Machine de travail portative (100), comprenant :
un corps de machine (3) ;
une source d'entraînement (1) montée sur le corps de machine (3) ;
une lame de coupe (4) disposée au niveau d'une portion avant du corps de machine (3) pour faire saillie et entraînée par la source d'entraînement (1) afin de découper une cible de découpage ; et
une poignée arrière (7) raccordée de manière à pouvoir tourner à une portion arrière du corps de machine (3) et saisie par un opérateur, la poignée arrière (7) comprenant
une manette d'accélération (13) tournée sur opération de l'opérateur et ajustant une sortie de la source d'entraînement (1), et
un levier de verrouillage (25) stoppant et bloquant la rotation de la poignée arrière (7),
**caractérisée en ce que**
la poignée arrière (7) comprend
un levier de rotation (15) fixé par tourillon de manière rotative à un arbre (23) et agissant sur le levier de verrouillage (25) et la manette d'accélération (13), et
un ressort de bobine de torsion (24) fournissant une force de poussée au niveau du levier de rotation (15) pour être localisé à une position de verrouillage (R),
et **en ce que** selon la rotation du levier de rotation (15) à une position non de verrouillage, la rotation de la manette d'accélération (13) est régulée et le verrouillage de la poignée arrière (7) par le levier de verrouillage (25) est libéré.

2. Machine de travail portative (100) selon la revendication 1,
le levier de rotation (15) comprenant une première portion de contact (52) empêchant la rotation de la manette d'accélération (13) vers un côté d'accroissement de vitesse lorsque le levier de verrouillage (25) est tourné depuis la position de verrouillage (R) du verrouillage du levier de verrouillage (25) vers la position non de verrouillage et une seconde portion de contact (53) empêchant la rotation du levier de rotation (15) vers la position non de verrouillage lorsque la manette d'accélération (13) est tournée depuis une position de basse vitesse vers un côté d'accroissement de vitesse, et
la manette d'accélération (13) comprenant une première portion de contact (50) disposée sur le côté de la manette d'accélération pour entrer en contact avec la première portion de contact (52) du levier de rotation (15) et une seconde portion de contact (51) disposée sur le côté de la manette d'accélération pour entrer en contact avec la seconde portion de contact (53) du levier de rotation (15).

3. Machine de travail portative (100) selon la revendication 2,
chaque portion de contact (50, 51, 52, 53) étant formée selon une forme d'arc circulaire.

4. Machine de travail portative (100) selon la revendication 2 ou 3,
le levier de verrouillage (25) étant raccordé de manière à pouvoir tourner à la poignée arrière (7),
le levier de verrouillage (25) et le levier de rotation (15) étant raccordés l'un à l'autre par une tige (30), et
un côté d'extrémité de la tige (30) étant raccordé de manière à pouvoir tourner à un côté d'extrémité du levier de verrouillage (25), l'autre côté d'extrémité de la tige (30) étant disposé de manière lâche dans un trou allongé (29) formé dans le levier de rotation (15), et lorsque le levier de rotation (15) tourne par rapport à la position non de verrouillage, les premières portions de contact (50, 52) entrent en contact l'une avec l'autre avant que l'autre côté d'extrémité de la tige (30) heurte une extrémité du trou allongé (29).

5. Machine de travail portative (100) selon l'une quelconque des revendications 1 à 4,
la manette d'accélération (13) étant disposée au niveau du côté inférieur d'une portion de préhension (12) de la poignée arrière (7), un levier de sécurité (14) pour faire fonctionner la manette d'accélération (13) étant disposé au niveau du côté supérieur de la portion de préhension (12), et le levier de rotation (15) étant disposé au niveau du côté avant du levier de sécurité (14) de la portion supérieure de la poignée arrière (7).

6. Machine de travail portative (100) selon la revendication 5,
un commutateur d'arrêt (16) pour arrêter la source d'entraînement (1) étant prévu à côté du levier de rotation (15).
